# EUROPÄISCHE PATENTSCHRIFT

(11) **EP 0 582 174 B1**
(45) Veröffentlichungstag und Bekanntmachung des Hinweises auf die Patenterteilung: **29.05.1996**
(21) Anmeldenummer: 93111941.6
(22) Anmeldetag: 26.07.1993
(51) Int. Cl.: C02F 11/14, B09B 3/00

(54) **Zusatzstoffe und Verfahren zur Entwässerung und/oder Verfestigung von Schlämmen**
Additives and process for dewatering and/or solidification of sludge
Additifs et procédé pour la déshydratation et/ou solidification des boues d'égout

(30) Priorität: 05.08.1992 DE 4225886
(43) Veröffentlichungstag der Anmeldung: 09.02.1994
(73) Patentinhaber: Walhalla-Kalk Entwicklungs- und Vertriebsgesellschaft mbH, D-93055 Regensburg (DE)
(72) Erfinder: Schuster, Georg Dipl.-Ing., D-93105 Tegernheim (DE); Bever, Jürgen Dr.-Ing., D-87490 Haldenwang (DE); Lauterbach, Norbert Dipl.-Ing., D-93055 Regensburg (DE)
(74) Vertreter: Patentanwälte Beetz - Timpe - Siegfried Schmitt-Fumian - Mayr

(56) Entgegenhaltungen:
- DE-A- 2 456 225
- US-A- 3 837 872
- US-A- 4 632 765
- US-A- 5 043 081
- PATENT ABSTRACTS OF JAPAN, unexamined applications, C Field, Band 4, Nr. 186, 20. Dezember 1980 THE PATENT OFFICE JAPANESE GOVERNMENT Seite 29 C 36
- CHEMICAL ABSTRACTS, Band 94, Nr. 20, 18. Mai 1981, Columbus, Ohio, USA EBARA- INFILCO CO. LTD. "Treatment of Micro Powder Waste" Seite 357, Zusammenfassung- -Nr. 162 387z

## Beschreibung

Die Erfindung betrifft Zusatzstoffe auf der Basis Von gebrannten Kalkprodukten und Verfahren zur wirksamen Konditionierung bzw. Entwässerung von Klärschlämmen wie auch von anorganischen bzw. mineralischen Schlämmen sowie zur Verfestigung solcher Schlämme, die zur Ablagerung auf Deponien vorgesehen sind.

In der folgenden Beschreibung beziehen sich die angegebenen Werte von Scherfestigkeiten auf mit einem Penetrometer bzw. der sog. Proctor-Nadel ermittelte Scherfestigkeiten, falls nichts anderes erwähnt. Die Proctor-Nadel wird im Erdbau zur Verdichtungskontrolle eingesetzt.

Diese 'Nadel' ist eine austauschbare kreisförmige Platte, über die eine Druckkraft auf den Boden bzw. die Probe aufgebracht werden kann. Die Nadel wird senkrecht in den Untergrund eingedrückt; die dabei wirkende Kraft wird über eine Kompressionsfeder gemessen. Der Eindringwiderstand in kN/m² ergibt sich aus der Kraft beim Bruch und der Querschnittsfläche der Nadel.

Die Umrechnung von sog. Flügelscherfestigkeiten in mit dem Penetrometer ermittelte Scherfestigkeiten kann aufgrund von in der Literatur angegebenen empirischen Korrelationen erfolgen.

Es sind bereits verschiedene Verfahren bekannt, kommunale Klärschlämme oder anorganische bzw. mineralische Schlämme zu konditionieren, zu entwässern und sie gegebenenfalls durch Zuschläge so weit in ihrer Deponiefähigkeit zu verbessern, daß die für die Deponierung geforderte Mindestscherfestigkeit von z.B. 20 kN/m² erreicht wird. Eine Nachbehandlung mit Zusatzstoffen kommt insbesondere bei mäßig entwässerten Schlämmen aus Zentrifugen oder Bandfilterpressen in Betracht. Als Zusatzstoffe werden Feinkalk, Zemente, Flugaschen, gebrannter Ölschiefer, Sägemehl sowie Gemische dieser Komponenten eingesetzt. Die günstigsten Scherfestigkeiten bei der Verfestigung von Schlämmen zur Deponierung wurden bisher mit Feinkalk erzielt. Die Erfahrung hat gezeigt, daß zur Erzielung einer Scherfestigkeit von ca. 20 kN/m² mäßig entwässerten Schlämmen mindestens so viel Feinkalk zugesetzt werden muß, daß das Gemisch einen Trockenrückstand (TR) von ≧ 40 Masse-% aufweist. Die zu erreichende Scherfestigkeit von 20 kN/m² bezieht sich dabei grundsätzlich auf das frische Gemisch vor dem Einbau in eine Deponie. Es ist auch bekannt, daß je nach Zusatzstoff und dessen Menge die Scherfestigkeit in Abhängigkeit von der Zeit ansteigt. Dies gilt immer dann, wenn reaktive Komponenten zugesetzt werden. Diese Entwicklung läßt sich am besten an einer Monodeponie verfolgen. Hierzu liegen entsprechende Erkenntnisse vor (vgl. Horn, Demberg et al., Mitteilungen des Instituts für Bodenmechanik und Grundbau, Universität der Bundeswehr, München, "Beiträge zur Deponietechnik", Heft 7, München 1987); Peschen, Schuster et al., Sonderdruck aus Korrespondenz Abwasser, "Hinweise zur Technik der Nachbehandlung von Klärschlamm mit Feinkalk", 32. Jahrgang, Heft 12, 1985, S. 1076-1079, und J. Bever, Dissertation an der Universität der Bundeswehr, München; München, Juli 1980).

Zu deponierenden mäßig entwässerten Klärschlämmen werden zur Erhöhung der Menge an Trockenrückstand und der Scherfestigkeit 100 bis 250 kg Feinkalk je m³ Klärschlamm zugemischt. Zur Erzielung einer Erhöhung des Trockenrückstands um 1 Masse-% ist eine Feinkalkzugabe von ca. 10 kg/m³ Schlamm erforderlich. Die praktischen Erfahrungen an einer technischen Mischanlage haben gezeigt, daß bei den genannten Zugabemengen von Feinkalk bis auf Trockenrückstände der Gemische von 39 bis 44 Masse-% die gemessenen Scherfestigkeiten immer um den Grenzwert von 20 kN/m² schwanken. Höhere Scherfestigkeiten können nur mit erheblich höheren Zusatzstoffmengen erzielt werden. Darin liegen erhebliche Nachteile, da die Befahrbarkeit einer Deponie Scherfestigkeiten von mindestens 20 kN/m² erfordert, und eine Erhöhung der Scherfestigkeit mit erheblichem Material- und Mischaufwand verbunden ist.

Der bzw. die Zusatzstoffe sollten nach Möglichkeit weitere Funktionen übernehmen. So sollte die Festigkeit der Gemische mit der Zeit ansteigen, und es sollten, nach Möglichkeit, nur mäßig belastete Deponie-Sickerwässer, insbesondere bezüglich des Schwermetallgehalts und des CSB-Wertes, anfallen. Erste Versuche, Schwermetalle durch Zumischung von Tonen adsorptiv zu binden, wurden von Bever (Dissertation, a.a.O.) durchgeführt. Diese Mischungen hatten jedoch alle den gravierenden Nachteil, daß trotz Zugabemengen von ca. 200 bis 250 kg/m³ Naßschlamm und entsprechend hohen Trockenrückständen ≧ 40 Masse-% lediglich völlig unzureichende Flügelscherfestigkeiten von nur 8 bis 15 kN/m² bei den frischen Gemischen erzielt werden konnten. Vergleichbare Ergebnisse wurden bei Gemischen aus Klärschlamm, Kalk und Zement erzielt. Ähnlich ungünstige Resultate wurden auch in Versuchen im Zusammenhang mit der Erfindung unter Verwendung der Zusatzstoffe, Feinkalk, Kalkhydrat, Portlandzement, Trasszement, Hochofenzement und Flugasche sowie von Gemischen aus jeweils zwei der genannten Komponenten erhalten. Die Einzelkomponenten wurden, bezogen auf die Menge an Trockenrückstand des Klärschlamms, im Verhältnis 1:0,5 bis 1:2,5 eingemischt. Die Klärschlammgemische mit einem Gemisch aus zwei der genannten Komponenten wurden aus 0,4 bis 1,5 Teilen Kalkkomponente und 0,3 bis 0,6 Teilen Flugasche bzw. Portlandzement auf 1 Teil Klärschlamm, ebenfalls bezogen auf die Menge an Trockenrückstand des Klärschlamms, hergestellt. Von den verschiedenen Zementen zeigte der Portlandzement zwar bessere Ergebnisse als die übrigen Zemente, jedoch waren die Versuche insgesamt wegen der ungünstigen Festigkeit der Produkte nicht zufriedenstellend.

Ein weiterer, sehr wesentlicher Faktor für die Handhabung und die Deponiefähigkeit von Klärschlammgemischen ist die Ausgasung von Ammoniak. Es ist wünschenswert, daß möglichst viel aus Ammoniumverbindungen stammendes Ammoniak in der Mischanlage ausgast und durch den Ammoniakwäscher abgetrennt wird. Dadurch wird sichergestellt, daß die Belastung der Sickerwässer mit Ammonium/Ammoniak gering gehalten werden kann.

Es wurde auch festgestellt, daß bei jeweils gleicher Menge an Zusatzstoff (Feinkalk sowie Gemische von Feinkalk und Portlandzement bzw. Feinkalk und Flugasche), die beste Ausgasungsrate innerhalb einer Mischzeit von 1 bis 20 Minuten erreicht werden kann. Die Ausgasungsrate beträgt z.B. bei Gemischen aus Klärschlamm und Feinkalk im Verhältnis 1:0,85, bezogen auf die Trockensubstanz des Klärschlamms, 40 bis 50 Masse-% bei Mischzeiten von 5 bis 20 Minuten. Bei Zusatz von Gemischen aus Feinkalk und Portlandzement bzw. Feinkalk und Flugasche werden ca. 27 bis 42 % des Ammoniaks im Mischer ausgegast und somit durch den Ammoniakwäscher erfaßt. Durch zweistufiges Mischen und zweimalige Additivzugabe, z.B. in einer Menge von 60 % im ersten Mischer und von 40 % im zweiten Mischer, läßt sich die Ammoniakausgasung auf 65 bis 70 % steigern. Die Analysen wurden jeweils am frischen Mischgut durchgeführt.

An Gemischen aus Zentrifugenschlamm und Feinkalk mit einem Trockenrückstand ≧ 40 Masse-% wurden aufgrund von Messungen an einer einige Jahre alten Deponie in Meßtiefen von < 1,5 bis > 4 m gemittelte Scherfestigkeiten zwischen 27,5 und 62,4 kN/m² festgestellt (Demberg, W.; Mitteilungen des Instituts für Bodenmechanik und Grundbau, Universität der Bundeswehr, München, "Beiträge zur Deponietechnik", Heft 7, München 1987).

Zusammenfassend kann festgehalten werden, daß Gemische aus mäßig entwässerten Klärschlämmen und Feinkalk, sofern sie einen Trockenrückstand ≧ 40 Masse-% aufweisen, im wesentlichen auch den neuerdings für Deponien geforderten Grenzwert der Scherfestigkeit von 20 kN/m² erfüllen. Es kommt jedoch immer wieder vor, daß Gemische mit geringeren Scherfestigkeiten von 15 bis 19 kN/m² erhalten werden. Diese Gemische können dann nicht sofort in die Deponie eingebaut werden. Sie müssen vielmehr zwischengelagert werden, worauf die Scherfestigkeit erneut gemessen wird und die Gemische erst einige Stunden oder sogar erst einige Tage später, wenn die Mindest-Scherfestigkeit erreicht ist, in die Deponie verbracht werden können. Dies behindert den Misch- und Deponiebetrieb und führt zu zusätzlichen Wartezeiten und Kosten. Da solche Gemische ferner pastos und klebrig sind, können sie nur schwer aus den Fahrzeugen entleert und in eine Deponie eingebaut werden.

Es ist davon auszugehen, daß für Monodeponien künftig eine Mindestscherfestigkeit von 50 kN/m² gefordert wird. Derartig hohe Scherfestigkeiten konnten bisher mit keinem der bekannten Gemische, auch nicht nach mehrmonatiger Zwischenlagerung, erreicht werden.

Der Erfindung liegt die Aufgabe zugrunde, Zusatzstoffe zur Verfestigung von vorentwässerten Klärschlämmen, insbesondere von kommunalen Klärschlämmen, und von vorentwässerten anorganischen bzw. mineralischen Schlämmen, ihre Herstellung sowie ihre Verwendung zur Erzeugung deponiefähiger verfestigter Produkte anzugeben.

Die Zusatzstoffe sollen sich auch zur Entwässerung bzw. Konditionierung der genannten Schlämme im Rahmen der üblichen Schlammentwässerungsverfahren einsetzen lassen.

Mit den Zusatzstoffen sollen verfestigte Schlämme mit hoher Anfangsscherfestigkeit herstellbar sein, die sofort oder in sehr kurzer Zeit nach dem Mischen rasch und ohne Zwischenlagerung auf eine Deponie verbracht werden können und Scherfestigkeiten » 20 kN/m² bzw. sogar > 50 kN/m2 aufweisen. Dabei soll die Scherfestigkeit mit der Zeit weiter ansteigen. Außerdem soll ein möglichst hoher Anteil des aus z.B. Klärschlamm gebildeten Ammoniaks in der Mischanlage ausgasen und im nachgeschalteten Gaswäscher erfaßt und abgetrennt werden können.

Die verfestigten Schlämme sollen ferner nur geringe Extrahierbarkeit, etwa durch Regen und Sickerwässer, aufweisen, um so Filtrate aus Schlammentwässerungsaggregaten mit geringem CSB-Wert, geringer Leitfähigkeit bzw. geringem Schwermetallgehalt erzielen zu können.

Die Aufgabe wird gemäß den unabhängigen Ansprüchen gelöst. Die Unteransprüche betreffen bevorzugte Ausführungsformen der Erfindungskonzeption.

Die erfindungsgemäßen Zusatzstoffe dienen zur Entwässerung bzw. Konditionierung von Klärschlämmen, insbesondere kommunalen Klärschlämmen, und von anorganischen bzw. mineralischen Schlämmen sowie auch zur Verfestigung von bereits vorentwässerten Klärschlämmen, insbesondere kommunalen Klärschlämmen, und von bereits vorentwässerten anorganischen bzw. mineralischen Schlämmen; sie enthalten gebrannte Kalkprodukte als hydraulische Komponente und sind durch folgende Merkmale gekennzeichnet:
(I) Sie bestehen aus mindestens zwei Komponenten, wovon mindestens eine Komponente aus der Gruppe A ausgewählt ist, die umfaßt:
   (A) Feinkalk (CaO) und
      Kalkhydrat (Ca(OH)₂),
      wobei diese in folgenden Anteilen vorliegen können:
      CaO : 0 bis 100 Masse %,
      Ca(OH)₂: 0 bis 100 Masse-%
   und eine weitere oder zwei weitere Komponenten aus der Gruppe B ausgewählt sind, die umfaßt:
   (B) Tone und Kieselgur,
      wobei diese in folgenden Anteilen vorliegen können:
      Tone : 0 bis 100 Masse-%,
      Ca(OH)₂: 0 bis 100 Masse-%,
   und
(II) die Mengenanteile der Komponenten A bzw. B in der Gesamtmasse aus A und B, deren Summe stets 100 Masse-% beträgt, sind wie folgt: Gesamt-Mengenanteil A: 50 bis 98 Masse-%, Gesamt-Mengenanteil B: 2 bis 50 Masse-%, jeweils auf die Trockensubstanzen bezogen.

In diesen Zusatzstoffen können die Mengenanteile der Komponenten innerhalb der Gruppe A, jeweils auf die Trockensubstanzen bezogen, in folgenden Bereichen liegen:
CaO : 0 bis 100 Masse-%;
Ca(OH)₂: 0 bis 100 Masse-%.

Analog können die Mengenanteile der Komponenten innerhalb der Gruppe B, jeweils auf die Trockensubstanzen bezogen, in folgenden Bereichen liegen:
Tone : 0 bis 100 Masse-%;
Kieselgur: 0 bis 100 Masse-%.

Nach bevorzugten Ausführungsformen können die Mengenanteile der Komponenten der Gruppen A und B in den Zusatzstoffen innerhalb folgender Bereiche liegen:
- Gruppe A:: 70 bis 97 Masse-%,
vorzugsweie 90 bis 97 Masse %, und
noch bevorzugter 95 bis 97 Masse-%;
- Gruppe B:: 3 bis 30 Masse-%,
vorzugsweise 3 bis 10 Masse-%, und
noch bevorzugter 3 bis 5 Masse-%.

Die erfindungsgemäßen Zusatzstoffe können ferner als weitere Komponente C Kalksteinmehl (CaCO₃) enthalten.

Bei Einsatz zur Schlammverfestigung beträgt der Mengenanteil an C vorzugsweise 5 bis 50 Masse-% und noch bevorzugter 5 bis 15 Masse-%, bezogen auf die Gesamtmasse aus A und B.

Bei Einsatz zur Vorentwässerung bzw. Konditionierung von Schlämmen beträgt der Mengenanteil an Komponente C
- zur Konditionierung von kommunalen Klärschlämmen
   vorzugsweise 10 bis 60 Masse-% und
   noch bevorzugter 30 bis 40 Masse-%
   und
- zur Konditionierung von anorganischen bzw. mineralischen Schlämmen
   vorzugsweise 60 bis 95 Masse-% und
   noch bevorzugter 80 bis 90 Masse-%,
jeweils bezogen auf die Gesamtmasse aus A und B.

Der erfindungsgemäß eingesetzte Feinkalk (CaO) ist vorzugsweise hochreaktiver Feinkalk mit einem t₆₀-Wert von weniger als 2 min. Der t₆₀-Wert entspricht der zur Erreichung von 60 °C beim Abbinden erforderlichen Zeit und stellt somit ein Maß für die Abbindegeschwindigkeit des Kalks dar.

Daneben können die Zusatzstoffe gemäß der Erfindung ferner eine Komponente D, die hydraulisch wirksam ist oder deren hydraulische Wirksamkeit durch Produkte der Gruppe A angeregt wird, in einer Menge von 5 bis 50 Masse-%, bezogen auf die Gesamtmasse aus A und B bzw. A, B und C, enthalten.

Vorteilhaft liegen die Zusatzstoffe als fertige Gemische der Komponenten vor.

Die Zusatzstoffe zur Konditionierung von Klärschlämmen werden vorteilhaft in Form von wäßrigen Suspensionen eingesetzt, vorzugsweise in einer Konzentration von 10 bis 40 Masse-%, bezogen auf die Gesamtmasse der Suspension.

Es ist hervorzuheben, daß die Gemische zur Verfestigung bzw. zur Konditionierung von Schlämmen verwendet werden können, ohne die bisher übliche Apparatetechnik verändern zu müssen.

Ein Verfahren zur Herstellung der erfindungsgemäßen Zusatzstoffe beruht auf dem Mischen der Komponenten der Gruppen A und B und gegebenenfalls C in trockenem Zustand in in den angegebenen Bereichen liegenden gewünschten Mengenverhältnissen.

Die Komponenten können jedoch auch, insbesondere für den Einsatz der Gemische zur Konditionierung bzw. Entwässerung von Schlämmen, in den gewünschten Mengen in einem wäßrigen Suspendiermedium, vorzugsweise in Wasser oder geklärtem Abwasser, suspendiert werden.

Das Verfahren gemäß der Erfindung zur Verfestigung von vorentwässerten Klärschlämmen, insbesondere kommunalen Klärschlämmen, und von vorentwässerten anorganischen bzw. mineralischen Schlämmen beruht auf dem Mischen des zu behandelnden Schlamms mit einem erfindungsgemäßen Zusatzstoff, was in einer üblichen Mischvorrichtung vorgenommen werden kann. Dabei ist vorteilhaft, wenn in zwei aufeinanderfolgenden Mischstufen gemischt wird. Die zweistufige Verfahrensweise eignet sich besonders zur Abtrennung von gebildetem Ammoniak, das ausgegast und durch einen nachgeschalteten Gaswäscher entfernt wird, da hierdurch die Abtrennausbeute an Ammoniak gegenüber der einstufigen Verfahrensweise erhöht werden kann.

Die Zusatzstoffe werden den zu behandelnden Schlämmen günstigerweise in einer solchen Menge zugesetzt, daß ein Trockenrückstand ≧ 25 Masse-% und vorzugsweise von 35 bis 45 Masse-% resultiert.

Die Scherfestigkeit der Produkte kann über die Menge der Zusatzstoffe eingestellt werden. Vorteilhaft wird so verfahren, daß die Zusatzstoffe in einer solchen Menge eingesetzt werden, daß unmittelbar nach dem Mischen eine Mindest-Scherfestigkeit ≧ 20 kN/m² erreicht wird; sie kann auch im Rahmen der Erfindung auf sehr hohe Scherfestigkeiten ≧ 50 kN/m² eingestellt werden, so daß damit auch künftig zu erwartenden Forderungen z.B. von Deponiebetreibern entsprochen werden kann.

Zur Konditionierung von Klärschlämmen, insbesondere von kommunalen Klärschlämmen, sowie von anorganischen bzw. mineralischen Schlämmen, wird der zu behandelnde Schlamm vor der Filtration oder vor der Zentrifugierung mit einem erfindungsgemäßen Zusatzstoff gemischt, worauf sich dann Filtration oder Zentrifugierung anschließen.

Hierbei wird der Zusatzstoff vorteilhaft in Form einer wäßrigen Suspension eingesetzt, deren Konzentration vorzugsweise 10 bis 40 Masse-% beträgt.

Die Zusatzstoffe werden günstigerweise in einer Menge von 10 bis 150 kg/m³ zu behandelnden Schlamms und vorzugsweise 10 bis 30 kg/m³ bei kommunalen Klärschlämmen und vorzugsweise 70 bis 100 kg/m³ bei anorganischen bzw. mineralischen Schlämmen eingesetzt.

Die Erfindung umfaßt auch die entsprechend vorentwässerten bzw. konditionierten Schlämme sowie insbesondere die unter Verwendung der Zusatzstoffe erhältlichen deponiefähigen Schlämme.

Die Verwendung der erfindungsgemäßen Zusatzstoffe als Konditionierungsmittel erlaubt ferner eine Verbesserung der Entwässerbarkeit von Schlämmen auf üblichen Entwässerungsaggregaten wie Bandfilterpressen oder Kammerfilterpressen, wobei auch höhere Durchsätze erzielt werden können.

Weiter kann mit den erfindungsgemäßen Zusatzstoffen bei gleichen Einsatzmengen und Mischbedingungen wie für die des Stands der Technik eine Verbesserung der Deponierbarkeit (Scherfestigkeit, Schwermetallbelastung der Sickerwässer) erzielt werden, wobei zusätzlich ganz oder teilweise auf den Einsatz anderer Konditionierungsmittel wie beispielsweise von Eisensalzen oder organischen Polymeren verzichtet werden kann.

Die Erfindung beruht nach einem ihrer wesentlichen Aspekte auf der völlig überraschenden Feststellung, daß bei der Verfestigung von vorentwässertem Klärschlamm unter Einsatz von hochreaktivem Feinkalk mit einem t₆₀-Wert von deutlich weniger als 2 min bei Trockenrückständen von 40 bis 45 Masse-% direkt aus dem Mischer Scherfestigkeiten von 40 bis über 50 kN/m² erzielt werden können.

Dies bedeutet gegenüber vergleichbaren Gemischen mit Feinkalken mit einem t₆₀-Wert von ca. 4 min und Scherfestigkeiten von 20 bis 22 kN/m² und Gemischen mit Feinkalk mit einem t₆₀-Wert von ca. 8 min und Flügelscherfestigkeiten von 17 bis 20 kN/m² mehr als eine Verdoppelung der Flügelscherfestigkeiten direkt aus dem Mischer. Diese Scherfestigkeiten wurden jeweils unter optimierten Mischbedingungen (Mischer Typ L, Mischzeit 5 min und 20 min bei einer Drehzahl des Mischers von 25 min⁻¹) erreicht. Bei den Optimierungsversuchen wurde die Mischzeit zwischen 2 und 20 min, bei Drehzahlen von 10 bis 50 min⁻¹ variiert. Parallel dazu wurde die prozentuale Ammoniakausgasung durch Analysieren der Schlämme ermittelt. Die günstigsten Ergebnisse wurden mit schonender Vermischung bei Mischzeiten von 4 bis 5 min sowie einer Mischzeit von 20 min bei Drehzahlen um 25 min⁻¹ erzielt. Die Flügelscherfestigkeiten lagen bei diesen Drehzahlen etwa 18 bis 27 % höher als bei Drehzahlen um 50 min⁻¹.

Die folgenden Beispiele erläutern die Erfindung. Alle Mengenangaben in Prozent sind massebezogen.

### Beispiel 1

Es wurden Gemische aus Feinkalk mit einem t₆₀-Wert von 1 min mit 5, 10 sowie 20 Masse-% Ton hergestellt. Diese Gemische wurden in einem Labormischer Typ L als Zusatzstoffe mäßig entwässertem Klärschlamm (Zentrifugenschlamm) zugesetzt.

Die erhaltenen Ergebnisse sind in Tabelle 1 zusammengefaßt.

**Tabelle 1**

| Verfestigung von KS mit CaO-Ton-Gemischen | | | | | | | |
|---|---|---|---|---|---|---|---|
| TR KS (%) | Eingesetztes Gemisch | | TR (%) | Produkt Scherfestigkeit (kN/m²) nach Tagen | | | |
| | CaO (%) | Ton (%) | | 0 | 1 | 7 | 28 |
| 22,3 | 95 | 5 | 42,4 | 57 | 68 | 72 | 95 |
| 22,3 | 90 | 10 | 41,7 | 38 | 43 | 45 | 56 |
| 22,3 | 80 | 20 | 44,6 | 17 | 25 | 27 | 39 |
| KS = Klärschlamm. | | | | | | | |

### Beispiel 2

Es wurde wie in Beispiel 1 verfahren, wobei zu den Versuchen anstelle von Ton Kieselgur eingesetzt wurde.

Die erhaltenen Ergebnisse gehen aus Tabelle 2 hervor.

**Tabelle 2**

| Verfestigung von KS mit CaO-Kieselgur-Gemischen | | | | | | | |
|---|---|---|---|---|---|---|---|
| TR KS (%) | Eingesetztes Gemisch | | TR (%) | Produkt Scherfestigkeit (kN/m²) nach Tagen | | | |
| | CaO (%) | Kieselgur (%) | | 0 | 1 | 7 | 28 |
| 22,3 | 95 | 5 | 43,5 | 42 | 53 | 56 | 70 |
| 22,3 | 90 | 10 | 43,1 | 56 | 66 | 68 | 93 |
| 22,3 | 80 | 20 | 40,3 | 23 | 28 | 31 | 46 |

Vergleicht man diese Ergebnisse mit den bislang erreichbaren Scherfestigkeiten von etwa 20 kN/m² sofort aus dem Mischer und 28 bis 34 kN/m² nach 28 Tagen, ist der große Vorteil des erfindungsgemäßen Verfahrens sofort offensichtlich, insbesondere, wenn man berücksichtigt, daß für den Einbau in eine Deponie etwa mit Hilfe einer Moorraupe eine Mindestscherfestigkeit von 32 kN/m² für das direkt nach dem Mischen aus dem Mischer erhaltene Produkt erforderlich ist. Die erfindungsgemäß erzielten außerordentlich hohen Scherfestigkeiten ermöglichen den sofortigen Einbau in die Deponie und erlauben ein sofortiges Befahren des Mischgutes. Die aufwendige und kostenintensive Zwischenlagerung des Mischgutes bzw. der Einbau des frischen Mischgutes an verschiedenen Stellen bzw. in verschiedenen Kassetten einer Deponie und die Verteilung und Verdichtung des Mischgutes erst nach Tagen oder Wochen entfallen damit. Die extrem hohen Scherfestigkeiten, die bereits nach 28 Tagen erzielt wurden, sind ferner von großer Wichtigkeit für die Standsicherheit und das Langzeitverhalten des Deponiekörpers.

### Beispiele 3 - 5 und Vergleichsbeispiele 1 und 2

Die Versuche wurden in technischem Maßstab unter Verwendung eines Zentrifugenschlamms durchgeführt, der aus einem kommunalen Klärschlamm erhalten worden war.

Das Mischen mit den Zusatzstoffen erfolgte zweistufig in einer technischen Mischanlage, wobei in der ersten Mischstufe etwa 5 min und in der zweiten Mischstufe etwa 15 min gemischt wurde. Dabei wurde gebildetes Ammoniak abgezogen und in einem Ammoniakwäscher entfernt. Durch die zweistufige Verfahrensweise konnte eine weitgehend vollständige Ammoniakentfernung sichergestellt werden, ohne daß das Mischergebnis bzw. die Scherfestigkeit der resultierenden verfestigten Produkte negativ beeinflußt wurden.

Die Scherfestigkeiten wurden sofort nach dem Mischen im Container in 0,4 - 1,0 m Tiefe gemessen. Die Ergebnisse sind in Tabelle 3 zusammengestellt. Sie zeigen, daß auch bei zweistufigem Mischen gleich hohe Scherfestigkeitswerte wie bei einstufigem Mischen erreicht werden können.

**Tabelle 3**

| Verfestigung von Klärschlamm mit Zusatzstoffen | | | | |
|---|---|---|---|---|
| Beispiel/Zusatzstoff | TR KS (%) | Produkt | | Temperatur Mischer (° C) |
| | | TR (%) | Scherfestigkeit sofort (kN/m2) | |
| Vergleichsbeispiel 1: | | | | |
| CaO | 20-23 | 40-44,7 | ca. 20 | 50 |

| Vergleichsbeispiel 2: | | | | |
|---|---|---|---|---|
| CaO | 22,5 | 43 | ca. 20 | 50 |

| Beispiel 3: | | | | |
|---|---|---|---|---|
| 98 % CaO | 19,8 | 47,2 | 43-81 | 80 |
| 2 % Ton | | | | |

| Beispiel 4: | | | | |
|---|---|---|---|---|
| 95 % CaO | 20,8 | 47,5 | 56-93 | 60 |
| 5 % Ton | | | | |

| Beispiel 5: | | | | |
|---|---|---|---|---|
| 90 % CaO | 20,5 | 46,4 | 62-81 | 60 |
| 10 % Kieselgur | | | | |

Aus den Ergebnissen von Tabelle 3 ergeben sich zwei mögliche Verfahrensvarianten:
1. Man stellt das Mischungsverhältnis für den Mischer auf Trockenrückstände ≧ 40 Masse-% ein und nutzt die wesentlichen Vorteile der hohen Scherfestigkeiten für die Standfestigkeit und den Betrieb der Deponie,
   oder
2. man magert das Mischungsverhältnis ab, um beispielsweise nur die für den Deponiebetrieb mit Hilfe einer Moorraupe erforderlichen 32 kN/m² einzuhalten, oder man magert sogar soweit ab, daß lediglich die noch für die Deponie vorgeschriebenen Mindestscherfestigkeiten von etwa 20 kN/m² erreicht werden.

### Beispiele 6 bis 10

Die Versuche wurden wie in Beispiel 4 durchgeführt, wobei das Mischungsverhältnis von Klärschlamm und Zusatzstoff unter Einstellung der angegebenen Trockenrückstände der gemischten Produkte variiert wurde.

Die erhaltenen Ergebnisse sind in Tabelle 4 zusammengestellt.

**Tabelle 4**

| Verfestigung von Klärschlamm mit CaO-Ton-Gemisch | | | | |
|---|---|---|---|---|
| Beispiel/Zusatzstoff | TR KS (%) | Produkt | | Temperatur Mischer/Fahrzeug (°C) |
| | | TR (%) | Scherfestigkeit sofort (kN/m²) | |
| Beispiel 6: | | | | |
| 95 % CaO | 20,5 | 46,0 | 69-75 | 68 72 |
| 5 % Ton | | | | |

| Beispiel 7: | | | | |
|---|---|---|---|---|
| 95 % CaO | 20,7 | 41,6 | 50-56 | 57 70 |
| 5 % Ton | | | | |

| Beispiel 8: | | | | |
|---|---|---|---|---|
| 95 % CaO | 20,9 | 39,4 | 44-50 | 50 69 |
| 5 % Ton | | | | |

| Beispiel 9: | | | | |
|---|---|---|---|---|
| 95 % CaO | 20,7 | 36,8 | 43 | 42 -- |
| 5 % Ton | | | | |

| Beispiel 10: | | | | |
|---|---|---|---|---|
| 95 % CaO | 20,9 | 34,1 | 22-28 | 38 49 |
| 5 % Ton | | | | |

Die Ergebnisse der Tabelle 4 zeigen, daß selbst mit lediglich 34,1 % Trockenrückstand noch Scherfestigkeiten von 22 bis 28 kN/m², also größere Werte als derzeit für Deponien vorgeschrieben, erreicht werden. Das heißt andererseits, daß bei Einsatz eines Gemisches aus Feinkalk und Ton statt 200 kg Zusatzstoff je Kubikmeter Klärschlamm lediglich 140 kg Zusatzstoff je Kubikmeter Klärschlamm bei Einsatz des Gemisches erforderlich sind, um Scherfestigkeiten über dem Grenzwert zu erreichen, was einen für die Praxis und in wirtschaftlicher wie ökologischer Hinsicht wichtigen Vorteil darstellt.

Für den Betreiber einer Mischanlage und/oder einer Deponie ergeben sich damit die Vorteile hoher Standsicherheit des Deponiegutes und/oder deutlich geminderter Aufbereitungskosten für das Mischgut sowie eines problemlosen Betreibens der Deponie.

Weitere erhebliche Vorteile der Erfindung liegen darin, daß bei Verwendung erfindungsgemäßer Zusatzstoffe verfestigte Schlämme resultieren, die aufgrund der adsorptiven Eigenschaften der Ton- und/oder Kieselgurkomponente und der dadurch veränderten Matrixeigenschaften des Kalkgerüsts erheblich weniger durch Regen- bzw. Sickerwasser extrahierbar sind, so daß z.B. geringer mit Schadstoffen wie Schwermetallen belastete Sickerwässer und Drainagewässer entstehen als bei der bisherigen Verfahrensweise der Schlammverfestigung.

Als weiterer Vorteil kommt im Rahmen der Erfindung hinzu, daß sich die erfindungsgemäß erhältlichen deponiefähigen Schlämme im Einklang mit der Klärschlammverordnung auch landwirtschaftlich verwerten lassen.

### Vergleichsbeispiel 3 und Beispiele 11 bis 13

Zur Untersuchung der Belastung des Sickerwassers einer Deponie mit Cd, Cu und Ni wurde ein Klärschlamm mit CaO (Vergleichsbeispiel 3) sowie mit erfindungsgemäßen Zusatzstoffen verfestigt und deponiert.

Die Sickerwässer wurden während 21 Tagen aus 20 kg unverdichtetem Produkt gewonnen und analysiert (142 cm³ Sickerwasser).

Die Ergebnisse der Sickerwasseranalysen sind in Tabelle 5 angegeben. Die Ergebnisse zeigen, daß mit den erfindungsgemäßen Zusatzstoffen die Belastung der Sickerwässer mit den in höherer Konzentration vorliegenden Schwermetallionen Cu und Ni auf etwa ein Drittel verringert werden kann, wenn der Gehalt an Komponente B (Ton bzw. Kieselgur) mehr als etwa 2 % beträgt.

**Tabelle 5**

| Sickerwasseranalysen | | | |
|---|---|---|---|
| Beispiel/Zusatzstoff | Cd (mg/l) | Cn (mg/l) | Ni (mg/l) |
| Vergleichsbeispiel 3: | | | |
| CaO | 0,003 | 0,03 | 1,62 |

| Beispiel 11: | | | |
|---|---|---|---|
| 98 % CaO | 0,003 | 0,03 | 1,70 |
| 2 % Ton | | | |

| Beispiel 12: | | | |
|---|---|---|---|
| 95 % CaO | 0,003 | 0,01 | 0,42 |
| 5 % Ton | | | |

| Beispiel 13: | | | |
|---|---|---|---|
| 90 % CaO | 0,003 | 0,01 | 0,48 |
| 10 % Kieselgur | | | |

Die erfindungsgemäßen Zusatzstoffe eignen sich auch in vorteilhafter Weise zur Vorentwässerung bzw. zur Konditionierung von Schlämmen, insbesondere von Klärschlämmen, vor der Entwässerung, die z.B. in Kammerfilterpressen vorgenommen wird.

Die nachstehenden Beispiele belegen diese Anwendbarkeit.

### Vergleichsbeispiel 4 und Beispiele 14 und 15

Ein kommunaler Klärschlamm wurde vor dem Entwässern mit Kalkhydrat (Ca(OH)₂) (Vergleichsbeispiel 4) sowie mit einem erfindungsgemäßen Zusatzstoff behandelt.

Die beiden verglichenen Zusatzstoffe wurden in Form 15 %iger wässeriger Suspensionen eingesetzt, wobei in Vergleichsbeispiel 4 und in Beispiel 14 jeweils 15 kg Zusatzstoff sowie 7 kg Eisensalzlösung pro Kubikmeter Schlamm zum Einsatz kamen.

Die Ergebnisse sind in Tabelle 6 angegeben.

Bei ansonsten gleichen Konditionierungsbedingungen ergab sich, daß durch den erfindungsgemäßen Zusatzstoff nicht nur der Feststoffanteil im Filterkuchen erheblich erhöht, sondern auch die Scherfestigkeit des frischen Filterkuchens signifikant gesteigert werden konnte.

Beispiel 15 zeigt den überraschenden Befund, daß im erfindungsgemäßen Fall der Zusatz der Eisensalzlösung auch unterbleiben kann, da ein vergleichbar hoher Trockenrückstand des Filterkuchens resultiert und die Scherfestigkeit gegenüber dem Vergleichsbeispiel 4 sogar erheblich erhöht ist. Die Erfindung führt also nicht nur zu dem großen Vorteil, daß stabile Filterkuchen mit höheren Scherfestigkeiten als bisher erzielt werden können, sondern zu dem weiteren wichtigen Vorteil, daß durch den Wegfall der Eisensalze keine zusätzlichen Anionen, wie Chlorid und Sulfat, und keine zusätzlichen Schwermetalle aus eingesetzten Eisensalzen in den Filterkuchen bzw. in das Preßwasser gelangen, während nach dem Stand der Technik die Schlammkonditionierung mit Eisensalzen zu gravierenden zusätzlichen Abwasserbelastungen führt, wobei auch die wirtschaftlichen Vorteile der Einsparung von Eisensalzen nicht außeracht gelassen werden sollten.

**Tabelle 6**

| Konditionierung von Klärschlamm | | | | |
|---|---|---|---|---|
| Beispiel/Zusatzstoff | Menge an Zusatzstoff (kg/m³ Schlamm) | Zusatz Eisensalzlösung (kg/m³ Schlamm) | Feststoffanteil (TR) in Filterkuchen (%) | Scherfestigkeit des frischen Filterkuchens (kN/m²) |
| Vergleichsbeispiel 4: | | | | |
| Ca(OH)₂ | 15 | 7 | 42,3 | 35,2 |

| Beispiel 14: | | | | |
|---|---|---|---|---|
| 95 % Ca(OH)₂ | 15 | 7 | 46,1 | 46,7 |
| 5 % Ton | | | | |

| Beispiel 15: | | | | |
|---|---|---|---|---|
| 95 % Ca(OH)₂ | 17 | 0 | 42,2 | 41,6 |
| 5 % Ton | | | | |

### Vergleichsbeispiel 5 und Beispiele 16 bis 18

Ein Industrieschlamm aus Eisenhydroxid mit einem Trockenrückstand von 12,6 g/l wurde mit Gemischen aus Kalkhydrat und Kalksteinmehl (Vergleichsbeispiel 5) sowie mit erfindungsgemäßen Gemischen aus Kalkhydrat, Kalksteinmehl und Ton (Beispiele 16-18) vor der Einführung in die Filterpresse konditioniert.

Im Vergleichsbeispiel ergaben sich, bei einer Preßdauer von 2 Stunden, je nach der Menge an Zusatzstoffen Feststoffanteile, Leitfähigkeitswerte und CSB-Werte in den in Tabelle 7 angegebenen Bereichen. Die Beispiele 16-18 zeigen, daß sich durch die Erfindung, bei signifikanter Verkürzung der erforderlichen Preßdauer auf etwa die Hälfte, erheblich günstigere Trockenrückstände, Leitfähigkeiten und CSB-Werte erzielen lassen. Die Erfindung führt also zu einer erheblichen Einsparung an Konditionierungsmitteln, kürzeren Preßzeiten, hohen Trockenrückständen in den erhaltenen Produkten und damit verbunden auch hohen Festigkeiten sowie zu erheblich geringer belasteten Eluaten mit geringerem Sauerstoffbedarf (CSB).

Die gleichen günstigen Ergebnisse lassen sich durch teilweisen oder vollständigen Ersatz des Tons durch Kieselgur erzielen.

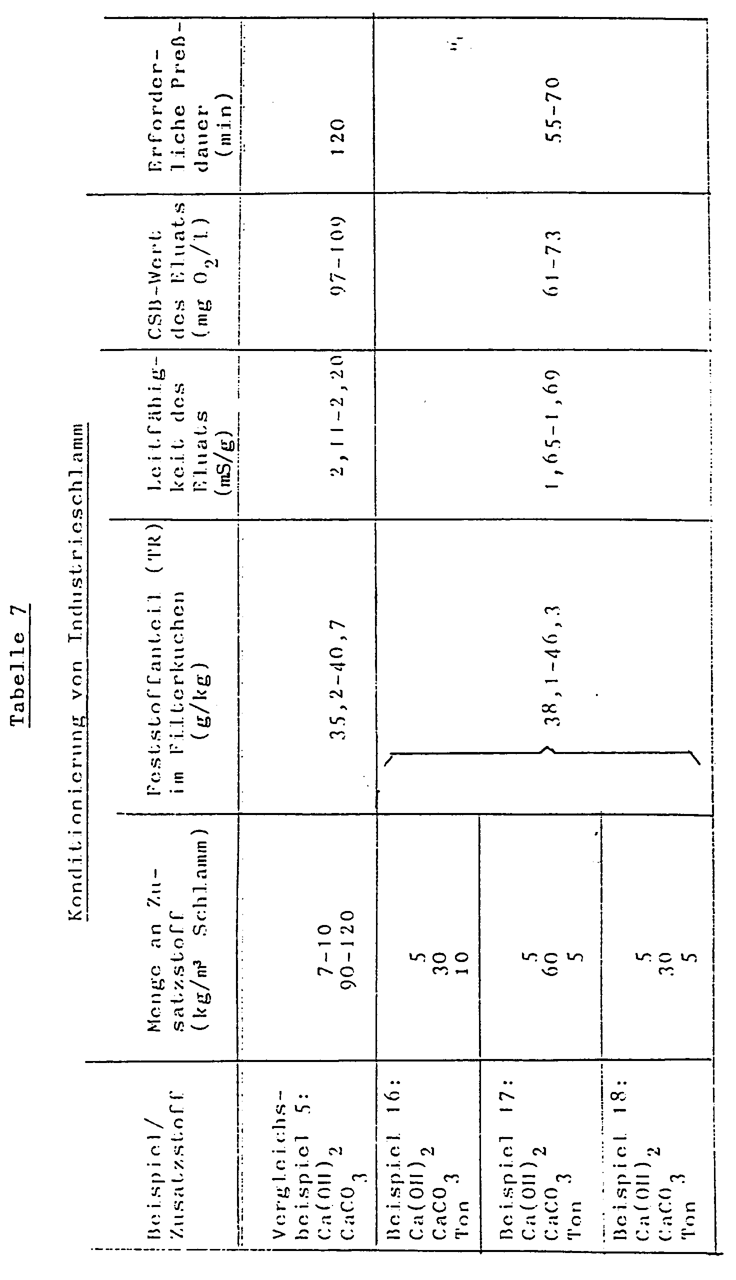

Zur Entwässerung kommunaler Schlämme werden häufig Zentrifugen und Bandfilterpressen eingesetzt. Als Flockungshilfsmittel dienen hierbei organische Polymere. Die Entwässerungsergebnisse mit Trockenrückständen von etwa 18 bis maximal 30 % sind insbesondere im Hinblick auf eine spätere Deponierung der Filterkuchen meist unzureichend. Aus diesem Grund wird, wie eingangs beschrieben, herkömmlicherweise eine Nachbehandlung mit Feinkalk nachgeschaltet.

Die nachstehenden Beispiele zeigen die erfindungsgemäß erzielbare Verbesserung.

### Vergleichsbeispiele 6 und 7 und Beispiel 19

Kommunaler Klärschlamm wurde an einer Bandfilterpresse unter Zusatz eines üblichen Flockungsmittels in einer Menge von 180 g/m³ Schlamm zur Konditionierung entwässert. Die in Tabelle 8 dargestellten Ergebnisse zeigen, daß sich überraschenderweise eine Konditionierung durch die Zusätze gemäß der Erfindung erzielen läßt, die sich bei Bandfilterpressen vorteilhaft ausnützen läßt. Damit ist eine betriebssichere Konditionierung auf Bandfilterpressen ohne Fehlchargen unter Einhaltung eines vorgegebenen hohen Trockenrückstands möglich. Zugleich kann eine gewünschte hohe Scherfestigkeit eingestellt werden.

**Tabelle 8**

| Konditionierung von Klärschlamm | | | |
|---|---|---|---|
| Beispiel/Zusatzstoff | Menge an Zusatzstoff (kg/m³ Schlamm) | Feststoffanteil (TR) des Filterkuchens (g/kg) | Anfangs-Flügelscherfestigkeit (kN/m²) |
| Vergleichsbeispiel 6: | 0 | 22,6 | 3,2-4,4 |

| Vergleichsbeispiel 7: | | | |
|---|---|---|---|
| CaCO₃ | 30 | 36,2 | 8,4-9,7 |
| Ton | 5 | | |

| Beispiel 19: | | | |
|---|---|---|---|
| Ca(OH)₂ | 5 | 39,3 | 13,6 |
| CaCO₃ | 30 | | |
| Ton | 5 | | |

Die gleichen Vorteile lassen sich bei der Schlammentwässerung durch Zentrifugieren erzielen.

### Beispiel 20

An einer Zentrifuge wurde Klärschlamm unter Zusatz von 200 g eines organischen Polymers pro Kubikmeter Schlamm auf einen Trockenrückstand von 24 bis 26 g/kg entwässert. Der Zusatz eines Gemisches von 15 kg Kalkhydrat und 15 kg Ton je m³ Ausgangsschlamm steigerte den Trockenrückstand im Austrag auf 38,5 %. Auch bei Zentrifugen zeigt sich also die vorteilhafte Konditionierungswirkung.

Durch die erfindungsgemäßen Zusatzstoffe lassen sich somit auch Flockungshilfsmittel einsparen.

### Beispiel 21

Das Beispiel bezieht sich auf die zeitliche Zunahme der Scherfestigkeit eines erfindungsgemäßen Deponiegutes.

Es wurde eine Versuchsmischung aus Zentrifugenschlamm und einem Gemisch aus 90 % Feinkalk und 10 % Ton hergestellt und in einem 2-m³-Container unter definierten Bedingungen abgelagert.

Der Trockenrückstand des eingebauten verfestigten Schlamms betrug am Anfang 37,6 % und war nach 3 Jahren auf 42,7 % angestiegen. Die Scherfestigkeit des Deponiegutes nahm, in Abhängigkeit von der Tiefe, von 4 bis 8 kN/m² am Anfang innerhalb von 3 Jahren auf 57 bis 61 kN/m² zu, obwohl das verfestigte Mischgut vor dem Einbau einer dreiwöchigen Regenperiode ausgesetzt war.

Die erfindungsgemäß erhältlichen deponiefähigen Schlämme können in Verbrennungsanlagen, z.B. in Müllverbrennungsanlagen, vorteilhaft eingesetzt und mitverbrannt werden. Hierdurch wird aufgrund der Kalkregeneration und der Schadstoffbindung ein hervorragender zusätzlicher Abgasreinigungseffekt erzielt.

## Patentansprüche

1. Zusatzstoffe zur Verfestigung von vorentwässerten Klärschlämmen, insbesondere kommunalen Klärschlämmen, und von vorentwässerten anorganischen bzw. mineralischen Schlämmen
auf der Basis von gebrannten Kalkprodukten,
**gekennzeichnet** durch folgende Merkmale:
(I) Sie bestehen aus mindestens zwei Komponenten, wovon mindestens eine Komponente aus der Gruppe A ausgewählt ist, die umfaßt:
(A) Feinkalk (CaO) und
Kalkhydrat (Ca(OH)₂),
und eine weitere oder zwei weitere Komponenten aus der Gruppe B ausgewählt sind, die umfaßt:
(B) Tone und
Kieselgur,
und
(II) die Mengenanteile der Komponenten A bzw. B in der Gesamtmasse aus A und B, deren Summe stets 100 Masse-% beträgt, sind wie folgt:
Gesamt-Mengenanteil A: 50 bis 98 Masse-%,
Gesamt-Mengenanteil B: 2 bis 50 Masse-%,
jeweils auf die Trockensubstanzen bezogen.

2. Zusatzstoffe zur Konditionierung von Klärschlämmen, insbesondere kommunalen Klärschlämmen, und von anorganischen bzw. mineralischen Schlämmen, gekennzeichnet durch folgende Merkmale:
(I) Sie bestehen aus mindestens zwei Komponenten, wovon mindestens eine Komponente aus der Gruppe A ausgewählt ist, die umfaßt:
(A) Feinkalk (CaO) und
Kalkhydrat (Ca(OH)₂),
und eine weitere oder zwei weitere Komponenten aus der Gruppe B ausgewählt sind, die umfaßt:
(B) Tone und
Kieselgur,
und
(II) die Mengenanteile der Komponenten A bzw. B in der Gesamtmasse aus A und B, deren Summe stets 100 Masse-% beträgt, sind wie folgt:
Gesamt-Mengenanteil A: 5 bis 98 Masse-%,
Gesamt-Mengenanteil B: 2 bis 95 Masse-%,
jeweils auf die Trockensubstanzen bezogen.

3. Zusatzstoffe nach den Ansprüchen 1 und 2, gekennzeichnet durch folgende Bereiche der Mengenanteile der Komponenten innerhalb der Gruppe A, jeweils auf die Trockensubstanzen bezogen:
CaO : 0 bis 100 Masse-%;
Ca(OH)₂: 0 bis 100 Masse-%.

4. Zusatzstoffe nach den Ansprüchen 1 bis 3,
gekennzeichnet durch folgende Bereiche der Mengenanteile der Komponenten innerhalb der Gruppe B, jeweils auf die Trockensubstanzen bezogen:
Tone : 0 bis 100 Masse-%;
Kieselgur: 0 bis 100 Masse-%.

5. Zusatzstoffe nach den Ansprüchen 1 bis 4,
gekennzeichnet durch folgende Bereiche der Mengenanteile der Komponenten der Gruppen A und B im Zusatzstoff:
Gruppe A: 70 bis 97 Masse-%,
Gruppe B: 3 bis 30 Masse-%.

6. Zusatzstoffe nach den Ansprüchen 1 bis 4,
gekennzeichnet durch folgende Bereiche der Mengenanteile der Komponenten der Gruppen A und B im Zusatzstoff:
Gruppe A: 90 bis 97 Masse-%
und vorzugsweise 95 bis 97 Masse-%;
Gruppe B: 3 bis 10 Masse % und vorzugsweise 3 bis 5 Masse-%.

7. Zusatzstoffe nach den Ansprüchen 1 und 3 bis 6, dadurch gekennzeichnet, daß sie zusätzlich als Komponente C Kalksteinmehl (CaCO₃) in einem Mengenanteil von 5 bis 50 Masse-% und vorzugsweise 5 bis 15 Masse-%, bezogen auf die Gesamtmasse aus A und B, enthalten.

8. Zusatzstoffe nach den Ansprüchen 2 bis 6, dadurch gekennzeichnet, daß sie zusätzlich als Komponente C Kalksteinmehl (CaCO₃) enthalten, wobei der Mengenanteil an C
- zur Konditionierung von kommunalen Klärschlämmen 10 bis 60 Masse-% und vorzugsweise 30 bis 40 Masse-% und
- zur Konditionierung von anorganischen bzw. mineralischen Schlämmen 60 bis 95 Masse-% und vorzugsweise 80 bis 90 Masse-%
beträgt,
jeweils bezogen auf die Gesamtmasse aus A und B.

9. Zusatzstoffe nach den Ansprüchen 1 bis 8,
dadurch gekennzeichnet, daß der Feinkalk (CaO) hochreaktiver Feinkalk mit einem t₆₀-Wert von weniger als 2 min ist.

10. Zusatzstoffe nach den Ansprüchen 1 bis 9,
dadurch gekennzeichnet, daß sie zusätzlich eine Komponente D, die hydraulisch wirksam ist oder deren hydraulische Wirksamkeit durch Produkte der Gruppe A angeregt wird, in einer Menge von 5 bis 50 Masse-%, bezogen auf die Gesamtmasse aus A und B bzw. A, B und C, enthalten.

11. Zusatzstoffe nach den Ansprüchen 1 bis 10,
dadurch gekennzeichnet, daß die Komponenten gemischt vorliegen.

12. Zusatzstoffe zur Konditionierung von Schlämmen nach den Ansprüchen 2 bis 6 und 8 bis 11,
dadurch gekennzeichnet, daß sie in Form von wäßrigen Suspensionen vorliegen, vorzugsweise in einer Konzentration von 10 bis 40 Masse-%, bezogen auf die Gesamtmasse der Suspension.

13. Verfahren zur Herstellung der Zusatzstoffe nach den Ansprüchen 1 bis 12,
gekennzeichnet durch Mischen der Komponenten der Gruppen A und B und gegebenenfalls C in trockenem Zustand in in den angegebenen Bereichen liegenden gewünschten Mengenverhältnissen.

14. Verfahren zur Verfestigung von vorentwässerten Klärschlämmen, insbesondere kommunalen Klärschlämmen, und von vorentwässerten anorganischen bzw. mineralischen Schlämmen durch Einmischen von gebrannten Kalkprodukten in die zu behandelnden Schlämme,
gekennzeichnet durch Mischen des zu behandelnden Schlamms mit einem Zusatzstoff nach einem der Ansprüche 1 bis 12 in einer üblichen Mischvorrichtung.

15. Verfahren nach Anspruch 14,
dadurch gekennzeichnet, daß in zwei aufeinanderfolgenden Mischstufen gemischt wird.

16. Verfahren nach den Ansprüchen 14 und 15,
dadurch gekennzeichnet, daß beim Mischen gebildetes Ammoniak ausgegast und durch einen nachgeschalteten Gaswäscher entfernt wird.

17. Verfahren nach den Ansprüchen 14 bis 16,
dadurch gekennzeichnet, daß die Zusatzstoffe den zu behandelnden Schlämmen in einer Menge zugesetzt werden, daß ein Trockenrückstand (TR) ≧ 25 Masse-% und vorzugsweise von 35 bis 45 Masse-% resultiert.

18. Verfahren nach den Ansprüchen 14 bis 17,
dadurch gekennzeichnet, daß die Zusatzstoffe in einer Menge eingesetzt werden, daß unmittelbar nach dem Mischen eine Mindest-Scherfestigkeit ≧ 20 kN/m² und vorzugsweise ≧ 50 kN/m² erreicht wird.

19. Verfahren zur Konditionierung von Klärschlämmen, insbesondere von kommunalen Klärschlämmen, sowie von anorganischen bzw. mineralischen Schlämmen,
gekennzeichnet durch Mischen des zu behandelnden Schlamms vor der Filtration oder vor der Zentrifugierung mit einem Zusatzstoff nach einem der Ansprüche 1 bis 12 und anschließende Filtration oder Zentrifugierung.

20. Verfahren nach Anspruch 19,
dadurch gekennzeichnet, daß der Zusatzstoff in Form einer wäßrigen Suspension eingesetzt wird, deren Konzentration vorzugsweise 10 bis 40 Masse-% beträgt.

21. Verfahren nach den Ansprüchen 19 und 20,
dadurch gekennzeichnet, daß der Zusatzstoff in einer Menge von 10 bis 150 kg/m³ zu behandelnden Schlamms und vorzugsweise 10 bis 30 kg/m³ bei kommunalen Klärschlämmen und vorzugsweise 70 bis 100 kg/m³ bei anorganischen bzw. mineralischen Schlämmen eingesetzt wird.

22. Deponiefähige Schlämme, die unter Verwendung von Zusatzstoffen auf der Basis von gebrannten Kalkprodukten verfestigt sind, erhältlich nach den Verfahren der Ansprüche 13 bis 18.

23. Deponiefähige Schlämme nach Anspruch 22,
dadurch gekennzeichnet, daß sie eine Scherfestigkeit ≧ 20 kN/m² aufweisen.

24. Deponiefähige Schlämme nach den Ansprüchen 22 und 23, dadurch gekennzeichnet, daß sie Scherfestigkeiten ≧ 50 kN/m² aufweisen.

25. Deponie auf der Basis von mit gebrannten Kalkprodukten als Zusatzstoffen verfestigten Schlämmen,
gekennzeichnet durch deponiefähige Schlämme nach den Ansprüchen 22 bis 24.

26. Verwendung der Zusatzstoffe nach den Ansprüchen 1 bis 12 zur Konditionierung und/oder zur Entwässerung und/oder Verfestigung von Klärschlämmen, insbesondere kommunalen Klärschlämmen, und von anorganischen bzw. mineralischen Schlämmen.

27. Verwendung der nach den Verfahren der Ansprüche 14 bis 18 erhaltenen deponiefähigen Schlämme bzw. der deponiefähigen Schlämme nach den Ansprüchen 22 bis 24 im Deponiebau, in der Landwirtschaft sowie in Müllverbrennungsanlagen.

## Claims

1. Additives based on burnt lime products for solidification of pre-dewatered sewage sludge, particularly municipal sewage sludge, and pre-dewatered inorganic or mineral sludge, characterised by the following features:
(I) they consist of at least two components, at least one component being selected from group A, which comprises
(A) fine lime (CaO) and
slaked lime (Ca(OH)₂),
and one or two additional components selected from group B comprising:
(B) clays and
kieselguhr, and
(II) the proportions of components A and B in the total weight of A and B, which always total 100 wt.%, are as follows:
total of A: 50 to 98 wt.%
total of B: 2 to 50 wt.%,
relative to dry substance in each case.

2. Additives for treatment of sewage sludge, particularly municipal sewage sludge, and inorganic or mineral sludge, characterised by the following features:
(I) they consist of at least two components, at least one component being selected from group A, which comprises
(A) fine lime (CaO) and
slaked lime (Ca(OH)₂), and one or two additional components selected from group B comprising:
(B) clays and
kieselguhr, and
(II) the proportions of components A and B in the total weight of A and B, which always total 100 wt.%, are as follows:
total of A: 5 to 98 wt.%
total of B: 2 to 95 wt.%,
relative to dry substance in each case.

3. Additives according to claims 1 and 2, characterised by the following ranges of proportions of the components in group A, in each case relative to dry substance:
CaO : 0 to 100 wt.%
Ca(OH)₂ : 0 to 100 wt.%.

4. Additives according to claims 1 to 3,
characterised by the following ranges of proportions of the components in group B, in each case relative to dry substance:
Clays : 0 to 100 wt.%
Kieselguhr: 0 to 100 wt.%.

5. Additives according to claims 1 to 4,
characterised by the following ranges of proportions of the group A and B components in the additive:
Group A: 70 to 97 wt.%,
Group B: 3 to 30 wt.%.

6. Additives according to claims 1 to 4, characterised by the following ranges of proportions of group A and B components in the additive:
Group A: 90 to 97 wt.%, preferably 95 to 97 wt.%;
Group B: 3 to 10 wt.%, preferably 3 to 5 wt.%.

7. Additives according to claims 1 and 3 to 6, characterised in that they contain an additional component C, i.e. limestone dust (CaCO₃), in a proportion of 5 to 50 wt.% and preferably 5 to 15 wt.%, relative to the total weight of A and B.

8. Additives according to claims 2 to 6, characterised in that they contain an additional component C, i.e. limestone dust (CaCO₃), the proportion of C amounting to
- 10 to 60 wt.%, preferably 30 to 40 wt.% for processing of communal sewage sludge and
- 60 to 95 wt.%, preferably 80 to 90 wt.%, for processing of inorganic or mineral sludge,
in each case relative to the total weight of A and B.

9. Additives according to claims 1 to 5, characterised in that the fine lime (CaO) is highly reactive fine lime with a t₆₀ value of less than 2 min.

10. Additives according to claims 1 to 9, characterised in that they contain an additional component D which is hydraulically active or the hydraulic activity of which is excited by products of group A, in a proportion of 5 to 50 wt.% relative to the total weight of A and B or A, B and C.

11. Additives according to claims 1 to 10, characterised in that the components are mixed.

12. Additives for treatment of sludge according to claims 2 to 6 and 8 to 11, characterised in that they are in the form of aqueous suspensions, preferably in a concentration of 10 to 40 wt.% relative to the total weight of the suspension.

13. A method of manufacturing the additives according to claims 1 to 12, characterised by mixing the components of groups A and B and optionally C in the dry state in the desired proportions within the specified ranges.

14. A method of solidifying pre-dewatered sewage sludge, particularly municipal sewage sludge, and pre-dewatered inorganic or mineral sludge by mixing burnt lime products in with the sludge for treatment, characterised in that the sludge for treatment is mixed in a conventional mixer with an additive according to any of claims 1 to 12.

15. A method according to claim 14, characterised in that mixing is brought about in two successive stages.

16. A method according to claims 14 and 15, characterised in that ammonia formed during mixing is outgassed and removed by a downstream scrubber.

17. A method according to claims 14 to 16, characterised in that the additives are added to the sludge for treatment in a proportion such as to obtain a dry residue (German abbreviation TR) ≧ 25 wt.% and preferably 35 to 45 wt.%.

18. A method according to claims 14 to 17, characterised in that the additives are used in a quantity such that a minimum shearing strength ≧ 20 kN/m² and preferably ≧ 50 kN/m² is reached immediately after mixing.

19. A method of processing sewage sludge, particularly municipal sewage sludge, and inorganic or mineral sludge, characterised in that before filtration or before centrifuging the sludge for treatment is mixed with an additive according to any of claims 1 to 12, and then filtered or centrifuged.

20. A method according to claim 19, characterised in that the additive is used in the form of an aqueous suspension in a concentration preferably of 10 to 40 wt.%.

21. A method according to claims 19 and 20, characterised in that the additive is used in a proportion of 10 to 150 kg/m³ to the treated sludge and preferably 10 to 30 kg/m³ in the case of municipal sewage sludge and preferably 70 to 100 kg/m³ in the case of inorganic or mineral sludge.

22. Dumpable sludge solidified by using additives based on burnt lime products obtainable by the method of claims 14 to 18.

23. Dumpable sludge according to claim 22, characterised in that it has a shearing strength ≧ 20 kN/m².

24. Dumpable sludge according to claims 22 and 23, characterised in that it has a shearing strength greater than or equal to 50 kN/m².

25. A dump based on sludge solidified with additives in the form of burnt lime products, characterised by dumpable sludge according to claims 22 to 24.

26. Use of the additives according to claims 1 to 12 for treatment and/or dewatering and/or solidification of sewage sludge, particularly municipal sewage sludge, and inorganic or mineral sludge.

27. Use of the dumpable sludge obtained by the method of claims 14 to 18 or the dumpable sludge according to claims 22 to 24 for constructing dumps, in agriculture and in refuse incinerators.

## Revendications

1. Additifs pour solidifier des boues de curage prédéshydratées, en particulier des boues de curage communales, et des boues inorganiques ou minérales prédéshydratées, à base de produits à base de chaux calcinés, caractérisés par les caractéristiques suivantes :
(I) ils consistent en au moins deux constituants parmi lesquels au moins un constituant est choisi dans le groupe A qui comprend :
(A) la chaux pulvérisée (CaO) et
l'hydrate de chaux (Ca(OH₂), et un constituant supplémentaire ou deux constituants supplémentaires sont choisis dans le groupe B qui comprend :
(B) les argiles et
le kieselguhr,
et
(II) les proportions des constituants A ou B dans la masse totale de A et B, dont la somme est toujours égale à 100 % en masse, sont les suivantes :
proportion totale de A : 50 à 98 % en masse,
proportion totale de B : 2 à 50 % en masse,
rapportées dans chaque cas aux substances sèches.

2. Additifs pour conditionner des boues de curage, en particulier des boues de curage communales et des boues inorganiques ou minérales, caractérisés par les caractéristiques suivantes :
(I) ils consistent en au moins deux constituants parmi lesquels au moins un constituant est choisi dans le groupe A qui comprend :
(A) la chaux pulvérisée (CaO) et
l'hydrate de chaux (Ca(OH₂),
et un constituant supplémentaire ou deux constituants supplémentaires sont choisis dans le groupe B qui comprend :
(B) les argiles et
le kieselguhr,
et
(II) les proportions des constituants A ou B dans la masse totale de A et B, dont la somme est toujours égale à 100 % en masse, sont les suivantes :
proportion totale de A : 5 à 98 % en masse,
proportion totale de B : 2 à 95 % en masse, rapportées dans chaque cas aux substances sèches.

3. Additifs selon les revendications 1 et 2, caractérisés par les domaines suivants des proportions des constituants dans le groupe A, rapportées dans chaque cas aux substances sèches :
CaO : : 0 à 100 % en masse ;
Ca(OH)₂ : 0 à 100 % en masse.

4. Additifs selon les revendications 1 à 3, caractérisés par les domaines suivants des proportions des constituants dans le groupe B, rapportées dans chaque cas aux substances sèches :
Argiles : 0 à 100 % en masse ;
kieselguhr : 0 à 100 % en masse.

5. Additifs selon les revendications 1 à 4, caractérisés par les domaines suivants des proportions des constituants des groupes A et B dans l'additif :
Groupe A : 70 à 97 % en masse,
Groupe B : 3 à 30 % en masse.

6. Additifs selon les revendications 1 à 4, caractérisés par les domaines suivants des proportions des constituants des groupes A et B dans l'additif :
Groupe A : 90 à 97 % en masse et de préférence 95 à 97 % en masse,
Groupe B : 3 à 10 % en masse
et de préférence 3 à 5 % en masse.

7. Additifs selon les revendications 1 et 3 à 6, caractérisés en ce qu'ils contiennent en outre comme constituant C du calcaire pulvérisé (CaCO₃) en une proportion de 5 à 50 % en masse et de préférence de 5 à 15 % en masse, rapportée à la masse totale de A et B.

8. Additifs selon les revendications 2 à 6, caractérisés en ce qu'ils contiennent en outre comme constituant C du calcaire pulvérisé (CaCO₃), la proportion de C étant
- pour le conditionnement de boues de curage communales, de 10 à 60 % en masse, et de préférence de 30 à 40 % en masse et
- pour le conditionnement de boues inorganiques ou minérales, de 60 à 95 % en masse, de préférence de 80 à 90 % en masse,
rapportée dans chaque cas à la masse totale de A et B.

9. Additifs selon les revendications 1 à 5, caractérisés en ce que la chaux pulvérisée (CaO) est une chaux pulvérisée hautement réactive ayant une valeur t₆₀ inférieure à 2 min.

10. Additifs selon les revendications 1 à 9, caractérisés en ce qu'ils contiennent en outre un constituant D qui est efficace du point de vue hydraulique ou dont l'efficacité hydraulique est stimulée par les produits du groupe A, en une quantité de 5 à 50 % en masse par rapport à la masse totale de A et B ou de A, B et C.

11. Additifs selon les revendications 1 à 10, caractérisés en ce que les constituants sont sous forme mélangée.

12. Additifs pour le conditionnement de boues selon les revendications 2 à 6 et 8 à 11, caractérisés en ce qu'ils sont sous forme de suspensions aqueuses, de préférence en une concentration de 10 à 40 % en masse par rapport à la masse totale de la suspension.

13. Procédé de production des additifs selon les revendications 1 à 12, caractérisé par le mélange des constituants des groupes A et B et éventuellement C à l'état sec en des proportions voulues situées dans les domaines indiqués.

14. Procédé pour solidifier des boues de curage prédéshydratées, en particulier des boues de curage communales, et des boues inorganiques ou minérales prédéshydratées par incorporation de produits à base de chaux calcinés dans les boues qui doivent être traitées, caractérisé par le mélange de la boue qui doit être traitée avec un additif selon l'une des revendications 1 à 12 dans un dispositif mélangeur courant.

15. Procédé selon la revendication 14, caractérisé en ce que l'on mélange en deux étapes de mélange successives.

16. Procédé selon les revendications 14 et 15, caractérisé en ce que l'ammoniac formé au cours du mélange est amené à se dégager et est éliminé au moyen d'un épurateur de gaz raccordé en aval.

17. Procédé selon les revendications 14 à 16, caractérisé en ce que les additifs sont ajoutés aux boues qui doivent être traitées en une quantité telle qu'il en résulte un résidu sec (RS) ≧ 25 % en masse, et de préférence de 35 à 45 % en masse.

18. Procédé selon les revendications 14 à 17, caractérisé en ce que les additifs sont utilisés en une quantité telle qu'immédiatement après le mélange on atteint une résistance minimale au cisaillement ≧ 20 kN/m² et de préférence ≧ 50 kN/m².

19. Procédé pour conditionner des boues de curage, en particulier des boues de curage communales, ainsi que des boues inorganiques ou minérales, caractérisé par le mélange de la boue qui doit être traitée avant la filtration ou avant la centrifugation avec un additif selon l'une des revendications 1 à 12, puis la filtration ou la centrifugation.

20. Procédé selon la revendication 19, caractérisé en ce que l'additif est utilisé sous forme d'une suspension aqueuse dont la concentration est de préférence de 10 à 40 % en masse.

21. Procédé selon les revendications 19 et 20, caractérisé en ce que l'additif est utilisé en une quantité de 10 à 150 kg/m³ de boue qui doit être traitée et de préférence de 10 à 30 kg/m³ dans le cas de boues de curage communales et de préférence de 70 à à 100 kg/m³ dans le cas de boues inorganiques ou minérales.

22. Boues aptes à la décharge qui sont solidifiées au moyen d'additifs à base de produits à base de chaux calcinés, que l'on peut obtenir selon les procédés des revendications 14 à 18.

23. Boues aptes à la décharge selon la revendication 22, caractérisées en ce qu'elles présentent une résistance au cisaillement ≧ 20 kN/m².

24. Boues aptes à la décharge selon les revendications 22 et 23, caractérisées en ce qu'elles présentent des résistances au cisaillement ≧ 50 kN/m².

25. Décharge à base de boues solidifiées avec des produits à base de chaux calcinés en tant qu'additifs, caractérisée par des boues aptes à la décharge selon les revendications 22 à 24.

26. Utilisation des additifs selon les revendications 1 à 12 pour le conditionnement et/ou la déshydratation et/ou la solidification de boues de curage, en particulier de boues de curage communales et de boues inorganiques ou minérales.

27. Utilisation des boues aptes à la décharge obtenues selon les procédés des revendications 14 à 18 ou des boues aptes à la décharge selon les revendications 22 à 24, dans la construction de décharges, en agriculture et dans les installations d'incinération des ordures.
